# EUROPEAN PATENT SPECIFICATION

(11) **EP 2 434 899 B1**
(45) Date of publication and mention of the grant of the patent: **25.02.2015**
(21) Application number: 10727984.6
(22) Date of filing: 28.05.2010
(51) Int. Cl.: A21D 6/00, A21D 8/06, A21D 8/02, A21D 13/00

(54) **A METHOD OF PREPARING A FULLY COOKED FARINACEOUS PRODUCT**
VERFAHREN ZUR HERSTELLUNG EINES VOLLSTÄNDIG GEKOCHTEN MEHLHALTIGEN PRODUKTS
PROCÉDÉ DE PRÉPARATION D'UN PRODUIT FARINEUX ENTIÈREMENT CUIT

(30) Priority: 29.05.2009 EP 09161560
(43) Date of publication of application: 04.04.2012
(73) Proprietor: Bakery Supplies Europe Holding B.V., 1112 XE Diemen (NL)
(72) Inventor: AHRNÉ, Lilia, Maria, 421 66 Vaestra Froelunda (SE); SCHMIDT, Kerstin, 28357 Bremen (DE); CLARKE, Stephen, John, Buckley North Wales CH7 2AS (GB); MORET, Pieter, 4421 ML Capelle (NL)
(74) Representative: Nederlandsch Octrooibureau
(86) International application number: PCT/NL2010/050322
(87) International publication number: WO 2010/137982

(56) References cited:
- GB-A- 2 359 975
- JP-A- 3 127 941
- JP-A- 60 141 246
- US-A- 5 413 800
- OLSSON E E M ET AL: "Effect of near-infrared radiation and jet impingement heat transfer on crust formation of bread" JOURNAL OF FOOD SCIENCE, vol. 70, no. 8, October 2005 (2005-10), pages E484-E491, XP002548263 ISSN: 0022-1147
- OVADIA D Z ET AL: "IMPINGEMENT IN FOOD PROCESSING" FOOD TECHNOLOGY, INSTITUTE OF FOOD TECHNOLOGISTS, CHICAGO, IL, US, vol. 52, no. 4, 1 April 1998 (1998-04-01), pages 46-50, XP000752011 ISSN: 0015-6639

## Description

### TECHNICAL BACKGROUND OF THE INVENTION

The present invention relates to a method of preparing a fully cooked farinaceous product, notably a fully cooked farinaceous product comprising a browned crust. More particularly, the invention provides a method of preparing a fully cooked farinaceous food product, said method comprising the successive steps of preparing a farinaceous dough or batter; dividing the dough or batter into one or more portions; and cooking said one or more portions by exposing them (i) to infrared radiation and (ii) to impingement with hot air, wherein a fat-containing coating composition is applied onto the surface of the portions prior to, during or after the cooking of the portions.

### BACKGROUND OF THE INVENTION

It is well-established that fully cooked farinaceous products can be prepared using very different types of heat treatment, including oven baking, frying, infrared radiation, hot air impingement, superheated steam etc. Each of these heating techniques has its advantages and its drawbacks.

The preparation of fully cooked farinaceous products by means of frying yields fried products having a browned, crispy crust. Furthermore, fried products have a very distinct pleasant taste that is not found in fully cooked farinaceous products that have been prepared by means of other heating techniques. Doughnuts are a typical example of a fried farinaceous product.

An important drawback of fried farinaceous products resides in the high fat content of these products and the fact that these fats usually contain high levels of saturated fatty acids. Thus, from a nutritional perspective it is highly desirable to reduce the fat levels in these fried farinaceous products. This problem is well recognized in the prior art. Hence, it is not surprising that the prior art provides a variety of alternative heat treatment techniques that aim to yield fully cooked farinaceous products that are indistinguishable from fried products, except for the fact that they contain significantly less fat.

US 5,910,264, for instance, describes a domestic, electrical cooking apparatus for cooking precooked, deep-frozen or fresh feed, of the fryer type, with no oil bath and no preheating, said apparatus comprising a removable rotary basket heated by infrared radiation. In the US patent it is observed that the fact that the apparatus is heated by infrared rays makes it possible to cook, without an oil bath, commercial precooked deep-frozen food, such as chips, doughnuts, pommes dauphines etc., or fresh or uncooked food, such as chips, chestnuts, spring rolls, etc., without any drawbacks and any risks, in a hygienic and dietetic manner.

A drawback of the apparatus described in US 5,910,264 resides in the fact that the sensory properties of the crust of the cooked products prepared in such apparatus are sub-optimal. More particularly, both appearance and taste of the crust of these cooked products tend to be inferior to that of their fried counterparts.

JP 03 127941 describes a method of preparing a foodstuff by moulding a dough into a desired shape, spraying a heated fat or oil onto the moulded dough and subsequently heating the sprayed dough with hot air. The prepared foodstuff, e.g. doughnut or potato chips, has the flavour of fat or oil, but not a fatty or oily smell.

GB-A 2 359 975 describes a method of manufacturing a doughnut, comprising spraying a proven dough mixture with cooking fat and baking step. The fat content of doughnuts manufactured by this method is reduced comparison to fried doughnuts.

US 5,413,800 describes a process for the rapid total surface heating of a food product comprising exposing the food product to an infra-red heat source having an intensity of from 100 kW/m² to 1000 kW/m² and a wavelength from 0.8-2.5 µm. In the US patent it is observed that the outer surface of the food product may optionally be sprayed with 0.1-4% by weight of the food product with oil either prior to or after the rapid heat treatment. The method described in US 5,413,800 can be used to prepare a low fat food product having a heat-seared crisp outer surface.

Although the aforementioned methods can be used to produce food products having a reduced fat content, the sensory properties of these products are unsatisfactory. Hence, there remains a need for a heat processing technique that can suitably be used to prepare fully cooked farinaceous products with sensory properties that are comparable to those of fried products, but containing less fat than their fried counterparts.

### SUMMARY OF THE INVENTION

The present inventors have designed a process that meets the aforementioned need. The invention provides a method of preparing a fully cooked farinaceous food product, said method comprising the successive steps of:
A. preparing a farinaceous dough or batter by mixing flour, water and optionally one or more other bakery ingredients;
B. dividing the dough or batter into one or more portions; and
C. cooking said one or more portions by exposing them (i) to infrared radiation and (ii) to impingement with hot air, wherein the exposure to the infrared radiation and the impingement with hot air can occur simultaneously, sequentially or in any combinations thereof; and
wherein a fat-containing coating composition is applied onto the surface of the portions prior to, during or after the cooking of the portions.

The inventors have discovered that the use of a fat-containing coating in combination with two different heating techniques, i.e. infrared radiation and hot air impingement, yields a fully cooked product that is almost indistinguishable from a fried product. It is believed that the application of the fat-containing coating ensures that the crust of the fully cooked product has an eating quality that is similar to that of the crust of a fried product. Although the inventors do not wish to be bound by theory it is believed that the crust of the fully cooked product obtained from the present process is very similar to the crust of a fried product due to the fact that it contains a significant amount of fat. Unlike fried products, however, the present invention enables the preparation of high quality fully cooked farinaceous products having an overall fat content that is considerably lower than that of their fried counterparts.

The combination of infrared radiation and hot air impingement was found to be perfectly suitable for creating the conditions that cause the exterior of the fat-coated portions of dough or batter to lose a lot of moisture and that, in addition, promote heat-induced reactions that contribute to the desired eating characteristics of the crust, e.g. browning and Maillard reactions. The evaporation of water, as well as the aforementioned browning and Maillard reactions are all interrelated and very much affected by the type and conditions of heat processing employed, as well as by the composition of the dough or batter. The inventors have found that if in the present process no fat-containing coating composition is applied, the fully cooked farinaceous products obtained are of clearly inferior quality.

Furthermore, it was found that if the present process solely utilizes infrared radiation or hot air impingement to cook fat coated portions of dough or batter, the resulting fully cooked farinaceous products are inferior to their fried counterparts. In case only infrared radiation is employed, the crust tends to be thin and hard. When only impingement is used the cooked products are characterised by a relatively thick crust and a low moisture content. In order to achieve an acceptable crust colour with impingement alone, very high air temperatures need to be employed, which may results in a partially cooked product, i.e. the core of the product remains uncooked.. The inventors have found that uniform crust colour and optimum crust thickness and crust porosity can be achieved by using a combination of infrared heating and hot air impingement and by applying a fat-containing coating before, during or after these heat treatments.

The combined use of infrared radiation and impingement with hot air is described by Olson et al. ("Effect of near-infrared radiation and jet impingement heat transfer on crust formation of bread", J. of Food Sc. Vol. 70, no. 8, October 2005, 484-491). Olson et al. describe the results of a study that investigated the effect of air jet impingement and infrared radiation (alone or in combination) on crust formation of par-baked baguettes during post-baking.

### DETAILED DESCRIPTION OF THE INVENTION

The present invention relates to a method of preparing a fully cooked farinaceous food product, said method comprising the successive steps of:
A. preparing a farinaceous dough or batter by mixing flour, water and optionally one or more other bakery ingredients;
B. dividing the dough or batter into one or more portions; and
C. cooking said one or more portions by exposing them (i) for in total 20-600 seconds to infrared radiation, more than 50% of the energy content of said infrared radiation stemming from infrared radiation having a wavelength in the range of 0.7-10 µm and (ii) for in total 20-600 seconds to impingement with hot air having a temperature of at least 150 °C, wherein the exposure to the infrared radiation and the impingement with hot air can occur simultaneously, sequentially or in any combinations thereof; and
wherein a fat-containing coating composition is applied onto the surface of the portions prior to, during or after the cooking of the portions.

The term "infrared radiation" as used herein refers to electromagnetic radiation having a wavelength of 0.7 µm to 1 mm. Whenever reference is made herein to infrared radiation having a wavelength within a certain range, what is meant is that more than 50%, preferably more than 80% of the energy content of the infrared radiation stems from infrared radiation having a wavelength within said range.

In the present method the exposure to the infrared radiation and the impingement with hot air can occur simultaneously, sequentially or in any combinations thereof. Thus, in step C the present method may, for instance, employ simultaneous exposure to infrared radiation and impingement with hot air followed by exposure to impingement with hot air only.

The term "air" as used in relation to impingement with hot air should not be construed narrowly, as impingement with gases or gas mixtures other than air may produce similar results. Preferably, the hot air employed in the present method contains at least 50 wt.% of air. Most preferably, the hot air employed consists of air.

The term fat as used herein refers to triglycerides, diglycerides, monoglycerides and phospholipids.

In the present method the infrared radiation can suitably be provided by any type of infrared heater that is capable of producing infrared radiation with the right wavelength. The latter wavelength is dependent on the temperature of the emitting body. Most commercially available infrared heaters employ a flame or an electrically heated filament as the emitting body. The present method advantageously employs a infrared heater that contains an electrically heated filament as the emitting body. This filament may be protected by a heat-resistant quartz glass tube. Furthermore, said quartz tube may be filled with inert gas to prevent filament degradation. In the present method the infrared radiation is advantageously provided by infrared tube heaters.

The present method preferably employs infrared radiation having a very high energy content. Consequently, in a particularly preferred embodiment, the infrared radiation employed has a wavelength of 0.7-5.0 µm.

The inventors have found it beneficial to vary the intensity of infrared radiation that is employed in step C. According to a particularly preferred embodiment, the uncooked surface of the portions is first exposed to infrared radiation of very high intensity, following which intensity is reduced in a gradual or step-wise fashion. The initial use of high intensity infrared radiation offers the advantage that oven spring is realized at the beginning of the cooking process.

It is noted that the present method may suitably contain two phases, a first phase in which one side of the portions are exposed to infrared radiation and impingement with hot air and a second phase in which the other side of the portions is exposed to essentially the same treatment.

According to another preferred embodiment of the invention infrared radiation is used to expose the portions of dough or batter to high power densities. Advantageously, the portions are exposed to a heat flux of at least 2 kW/m², more preferably of at least 5 kW/m² and most preferably of 8-80 kW/m² for at least 20 seconds. Advantageously, the total time period during which the portions are exposed to the aforementioned heat flux is at least 40 seconds, more preferably at least 60 seconds and most preferably at least 90 second. Typically, the time period during which the portions are exposed to the earlier mentioned heat flux does not exceed 500 seconds. Preferably, said time period does not exceed 350 seconds.

Also the hot air impingement employed in the present method advantageously is used to achieve a very intense heat transfer into the portions. Accordingly, the portions are preferably exposed to impingement with hot air having a temperature of 180-340 °C, more preferably of 200-320 °C.

The fully cooked product that is obtained in the present method immediately after the final heat treatment typically has a core temperature of at least 85 °C, more preferably of at least 90°C and most preferably of 95-99 °C.

In the present method significant amounts of heat are transferred into the portions of dough or batter by both infrared radiation and hot air impingement. Typically, each of these two heating techniques accounts for at least 10%, preferably for at least 15% of the heat transfer that occurs within the present process.

The effectiveness of the impingement with hot air depends on the temperature of the hot air, but also on the flow rate of said hot air. Advantageously, the impingement with hot air comprises impinging the portions with hot air having a velocity of at least 1 m/s, preferably of 5-20 m/s.

An important advantage of the present method resides in the fact that it can produce significant "oven spring". Thus, in a preferred embodiment, the volume of the portions increases by at least 5%, preferably by at least 25%, during the cooking in step C of the present method. Typically, the fully cooked farinaceous food product has a specific volume of at least 1.4 ml/g.

In the present method, the cooking conditions not only bring about the formation of browned crust, but they also cause gelatinization of the starch that is contained in the interior of the portions. Typically, in the present method the temperature within the portions increases to at least 80 °C during the cooking in step C. More preferably, the temperature within the portions increases to at least 90 °C, most preferably to at least 95 °C during the cooking in step C.

It is an essential element of the fat-containing coating composition that it contains a significant amount of fat, e.g. at least 10 wt.% of fat. According to a particularly preferred embodiment, the coating composition contains:
- 20-100 wt.% of fat, preferably 20-100 wt.% of triglycerides;
- 0-80 wt.% of water;
- 0-30 wt.% of carbohydrates;
- 0-20 wt.% of proteinaceous matter; and
- 0-20 wt.% of other bakery ingredients.

The term "proteinaceous matter" as used herein encompasses proteins, oligopeptides, peptides and amino acids.

According to an even more preferred embodiment, fat and water together represent at least 80 wt.%, more preferably at least 90 wt.% of the coating composition. According to a particularly preferred embodiment, the coating composition contains at least 40 wt.% of fat, most preferably at least 40 wt.% of triglycerides. The inclusion of carbohydrates and/or proteinaceous matter in the coating composition can be advantageous as it may promote surface browning and flavour formation.

Other components that may be incorporated in the coating composition include, for instance, components that influence the adherence of the composition to the portions. Examples of such components include thickeners, gelling agents and emulsifiers.

The fat-containing coating composition can suitably be applied onto the portions of dough or batter prior to, during or after the cooking of said portions. Preferably, at least 50% of the fat-containing coating composition that is employed in the present method is applied prior to the cooking of the portions.

An important advantage of the present method lies in the fact that it enables the preparation of fully cooked farinaceous product that have a significantly lower fat content than their fried counterparts. Accordingly, it is strongly preferred to apply the coating composition in such an amount that the amount of fat delivered to the portions is relatively low. Thus, in a particularly preferred embodiment of the present method the coating composition is applied onto the surface to deliver 2-13%, more preferably 2-10%, and most preferably 3-8% of fat by weight of the portions.

The fat-containing coating composition may be applied onto the portions by any technique that is capable of depositing said composition as a layer onto the portions. Examples of suitable techniques include spraying (including curtain spraying), brushing, dipping etc. The fat-containing composition can be applied on the portions as a hot, warm or cold composition. According to one particularly advantageous embodiment, the fat-containing coating composition is applied onto the portions by contacting said portions for not more than 20 seconds with hot oil, e.g. oil having a temperature of at least 120 °C, or even of at least 150 °C. The contacting with hot oil may suitably occur by immersing the portions into the hot oil or by passing the portions through a spray or falling film of hot oil.

The present method is particularly suitable for cooking dough portions that have been leavened with the help of yeast and/or a chemical leavening agent prior to the exposure to the cooking step C.

As explained herein before, the present method offers the advantage that it enables the preparation of fully cooked farinaceous products having a relatively low fat content. Accordingly, it is preferred to employ a dough or batter that has a relatively low fat content. Preferably, the dough or batter prepared in step A contains less than 10% fat by weight of flour.

The method according to the invention can suitably be used to cook portions of dough or portions of batter. Since batter is usually fluid, it is advisable to hold the portions of batter in a receptacle until the starch has gelatinized to such an extent that the portions have become shape-retaining.

The present method is particularly suitable for cooking portions of dough. Typically, the dough employed in the present method contains 40-60% of water by weight of flour and 0-50% of other bakery ingredients by weight of flour.

In the present method portions of dough or batter are formed. These portions can take any shape or form. As regards the size of the portions it is preferred to employ portions of each 10-100 g.

The fully cooked farinaceous product obtained in the present method is preferably selected from the group consisting of: doughnuts, fried noodles, lardy cakes, Spritzkuchen, Krapfen, churros, bu 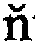 uelos and xuxos. According to a preferred embodiment, the fully cooked farinaceous product is a doughnut, especially a fully cooked doughnut having a fat content of 2-15 wt.%. Most preferably, the fully cooked farinaceous product is a doughnut having a reduced fat content of 2-10 wt.%.

The invention is further illustrated by means of the following, non-limiting examples.

### EXAMPLES

### Example 1

Ring doughnuts (41 grams) were prepared using the following recipe:

| | Wt. % |
|---|---|
| Flour | 54.2 |
| Water | 31.2 |
| Doughnut concentrate | 8.3 |
| Fat | 3.7 |
| Yeast | 2.6 |

The total fat content of the ring doughnuts prepared according to the above recipe was 6 wt.%. In order to allow them to be shipped to another location for finish frying, the raw doughnuts so prepared were stored in a freezer at -20 °C. After 3 weeks, the frozen doughnuts were taken from the freezer and allowed to thaw at 25 °C for 30 minutes. Subsequently, the doughnuts were proofed by placing them in a proofing cabinet for 60 minutes (30 °C, 80% relative humidity).

The proofed doughnuts were cooked using a travelling infrared oven that had been additionally equipped with hot air impingement nozzles. The oven consisted of a moving wire mesh belt the speed of which could be controlled. The infrared heating lamps and the hot air impingement nozzles were mounted above the moving belt. Half way along the belt there was a switchback, which effectively flipped the doughnuts. The heating elements consisted of six sets of two lamps mounted at adjustable angles, each set of which could be adjusted in intensity. The sets of lamps were evenly distributed across the length of the moving belt. In addition two hot air impingement nozzles were mounted, one near the centre of the belt and one near the end, so that each side of the doughnuts was exposed to the hot air directly. The temperature of the hot air was adjustable.

A number of experiments were carried out using the lamp intensities and impingement temperatures depicted in Table I (zone 1 representing the first and zone 8 representing the last zone of the oven that the belt passes through). In all experiments the residence time within the oven was 3 minutes. The raw doughnuts were sprayed with oil before entering the oven. Approximately 1.6 g grams of oil were deposited on each raw doughnut.

**Table I**

| **Zone 1 %** | **Zone 2 %** | **Zone 3 %** | **Zone 4 Imp. Temp** | **Zone 5 %** | **Zone 6 %** | **Zone 7 %** | **Zone 8 Imp. Temp** |
|---|---|---|---|---|---|---|---|
| 80 | 25 | 20 | 250 °C | 60 | 25 | 20 | 300 °C |

In terms of appearance and eating quality the fully cooked doughnuts so obtained were essentially indistinguishable from ordinary fried doughnuts. Upon leaving the oven, the fully cooked doughnuts had a core temperature of about 98 °C. The baking loss observed during the cooking process was around 8 wt.%. The fat content of the fully cooked doughnuts was about 7.5 wt.%.

### Example 2

Example 1 was repeated using the lamp intensities and impingement temperatures depicted in Table II. Again, the raw doughnuts were sprayed with oil prior to entering the oven. This time, the residence time within the oven was 4 minutes and 10 seconds.

**Table II**

| **Zone 1 %** | **Zone 2 %** | **Zone 3 %** | **Zone 4 Imp. Temp** | **Zone 5 %** | **Zone 6 %** | **Zone 7 %** | **Zone 8 Imp. Temp** |
|---|---|---|---|---|---|---|---|
| 50 | 15 | 0 | 250 °C | 55 | 15 | 0 | 300 °C |

Again, the appearance and eating of the fully cooked doughnuts so obtained were essentially indistinguishable from those of ordinary fried doughnuts. Upon leaving the oven, the fully cooked doughnuts had a core temperature of about 97 °C. The baking loss during cooking and the fat content of the fully cooked doughnuts were comparable to those mentioned in Example 1.

### Comparative Example A

Exampel 1 was repeated, except that this time the raw doughnuts were not sprayed with oil. The fully cooked doughnuts so obtained were clearly inferior to ordinary fried doughnuts in terms of both taste and appearance.

### Example 4

Example 1 was repeated using the lamp intensities and impingement temperatures depicted in Table III. This time the raw doughnuts were sprayed with an oil-and-water emulsion immediately before entering the oven. The emulsion applied had the following composition:
- 100 ml dextrose solution (15g dextrose/150 ml water)
- 50 ml starch solution (log starch /100g water)
- 100 ml oil
- 1 drop Tween

**Table III**

| **Zone 1 %** | **Zone 2 %** | **Zone 3 %** | **Zone 4 Imp. Temp** | **Zone 5 %** | **Zone 6 %** | **Zone 7 %** | **Zone 8 Imp. Temp** |
|---|---|---|---|---|---|---|---|
| 70 | 20 | 10 | 240 °C | 60 | 20 | 15 | 300 °C |

The appearance and eating of the fully cooked doughnuts so obtained were essentially indistinguishable from those of ordinary fried doughnuts. Upon leaving the oven, the fully cooked doughnuts had a core temperature of about 97 °C.

### Comparative Example B

Example 4 was repeated, except that his time the raw doughnuts were not sprayed with a fat-containing coating composition before entering the oven. Upon leaving the oven, the fully cooked doughnuts had a core temperature of about 97 °C. The appearance and eating of the fully cooked doughnuts so obtained were clearly inferior to those of the fully cooked doughnuts described in Example 4.

## Claims

1. A method of preparing a fully cooked farinaceous food product, said method comprising the successive steps of:
A. preparing a farinaceous dough or batter by mixing flour, water and optionally one or more other bakery ingredients;
B. dividing the dough or batter into one or more portions; and
C. cooking said one or more portions by exposing them (i) for in total 20-600 seconds to infrared radiation, more than 50% of the energy content of said infrared radiation stemming from infrared radiation having a wavelength in the range of 0.7-10 µm and (ii) for in total 20-600 seconds to impingement with hot air having a temperature of at least 150 °C, wherein the exposure to the infrared radiation and the impingement with hot air can occur simultaneously, sequentially or in any combinations thereof; and
wherein a fat-containing coating composition is applied onto the surface of the portions prior to, during or after the cooking of the portions, the fat being selected from triglycerides, diglycerides, monoglycerides, phospholipids and combinations thereof.

2. Method according to claim 1, wherein the infrared radiation is provided by infrared tube heaters.

3. Method according to claim 1 or claim 2, wherein the infrared radiation has a wavelength of 0.7-5.0 µm.

4. Method according to any one of the preceding claims, wherein the portions are exposed to impingement with hot air having a temperature of 180-340 °C, preferably of 200-320 °C.

5. Method according to any one of the preceding claims, wherein the impingement with hot air comprises impinging the portions with hot air having a velocity of at least 1 m/s, preferably of 5-20 m/s.

6. Method according to any one of the preceding claims, wherein the volume of the portions increases by at least 5%, preferably by at least 25% during the cooking in step C.

7. Method according to any one of the preceding claims, wherein the temperature within the portions increases to at least 95 °C during the cooking in step C.

8. Method according to any one of the preceding claims, wherein the coating composition contains:
- 20-100 wt.% of fat;
- 0-80 wt.% of water;
- 0-30 wt.% of carbohydrates;
- 0-20 wt.% of proteinaceous matter; and
- 0-20 wt.% of other bakery ingredients.

9. Method according to any one of the preceding claims, wherein the coating composition is applied onto the surface to deliver 2-10%, preferably 3-8% of fat by weight of the portions.

10. Method according to any one of the preceding claims, wherein the dough portions are leavened with the help of yeast and/or a chemical leavening agent prior to the exposure to the cooking step C.

11. Method according to any one of the preceding claims, wherein the dough or batter prepared in step A contains less than 10% of fat by weight of flour.

12. Method according to any one of the preceding claims, wherein the dough or batter is divided into portions of each 10-100 g.

13. Method according to any one of the preceding claims, wherein the fully cooked farinaceous product is selected from the group consisting of: doughnuts, fried noodles, lardy cakes, Spritzkuchen, Krapfen, churros, bunuelos and xuxos

14. Method according to claim 13, wherein the fully cooked farinaceous product is a doughnut.

15. Method according to claim 14, wherein the method yields a fully cooked doughnut containing 2-10 wt.% fat.

## Patentansprüche

1. Verfahren zur Herstellung eines vollständig gekochten mehlhaltigen Nahrungsprodukts, wobei das Verfahren die folgenden aufeinanderfolgenden Schritte aufweist:
A. Herstellen eines mehlhaltigen Knet- oder Rührteigs durch Mischen von Mehl, Wasser und optional einer oder mehreren Backzutaten;
B. Teilen des Knet- oder Rührteigs in einen oder mehrere Portionen; und
C. Kochen der einen oder der mehreren Portionen, indem sie (i) insgesamt 20-600 Sekunden Infrarotstrahlung ausgesetzt werden, wobei mehr als 50% des Energiegehalts der Infrarotstrahlung von Infrarotstrahlung mit einer Wellenlänge im Bereich von 0,7-10 µm stammt, und (ii) insgesamt 20-600 Sekunden dem Auftreffen warmer Luft mit einer Temperatur von mindestens 150°C ausgesetzt werden, wobei das Beaufschlagen mit Infrarotstrahlung und das Auftreffenlassen von warmer Luft gleichzeitig, sequentiell oder in beliebigen Kombinationen erfolgen kann; und
wobei eine fetthaltige Überzugszusammensetzung auf die Oberfläche der Portionen vor, während oder nach dem Kochen der Portionen aufgebracht wird, wobei das Fett unter Triglyceriden, Diglyceriden, Monoglyceriden, Phospholipiden und Kombinationen derselben ausgewählt ist.

2. Verfahren nach Anspruch 1, bei welchem die Infrarotstrahlung von Infrarotröhrenstrahlen bereitgestellt wird.

3. Verfahren nach Anspruch 1 oder Anspruch 2, bei welchem die Infrarotstrahlung eine Wellenlänge von 0,7-5,0 µm aufweist.

4. Verfahren nach einem der vorhergehenden Ansprüche, bei welchem die Portionen dem Auftreffen von warmer Luft mit einer Temperatur von 180-340°C, vorzugsweise 200-320°C ausgesetzt werden.

5. Verfahren nach einem der vorhergehenden Ansprüche, bei welchem das Auftreffenlassen von warmer Luft das Beaufschlagen der Portionen mit warmer Luft aufweist, die eine Geschwindigkeit von mindestens 1 m/s, vorzugsweise 5-30 m/s aufweist.

6. Verfahren nach einem der vorhergehenden Ansprüche, bei welchem das Volumen der Portionen um mindestens 5%, vorzugsweise um mindestens 25% während des Kochens in Schritt C zunimmt.

7. Verfahren nach einem der vorhergehenden Ansprüche, bei welchem die Temperatur in den Portionen auf mindestens 95°C während des Kochens in Schritt C steigt.

8. Verfahren nach einem der vorhergehenden Ansprüche, bei welchem die Überzugszusammensetzung aufweist:
- 20-100 Gewichtsprozent Fett;
- 0-80 Gewichtsprozent Wasser;
- 0-30 Gewichtsprozent Kohlenhydrate;
- 0-20 Gewichtsprozent eiweißhaltiges Material; und
- 0-20 Gewichtsprozent andere Backzutaten.

9. Verfahren nach einem der vorhergehenden Ansprüche, bei welchem die Überzugszusammensetzung auf die Oberfläche aufgebracht wird, um 2-10 Gewichtsprozent, vorzugsweise 3-8 Gewichtsprozent Fett bezogen auf die Portionen zu liefern.

10. Verfahren nach einem der vorhergehenden Ansprüche, bei welchem die Knetteigportionen mit Hilfe von Hefe und/oder einem chemischen Triebmittel angesäuert werden, bevor sie dem Schritt C unterzogen werden.

11. Verfahren nach einem der vorhergehenden Ansprüche, bei welchem der im Schritt A hergestellte Knetteig oder der Rührteig weniger als 10 Gewichtsprozent des Mehls an Fett enthält.

12. Verfahren nach einem der vorhergehenden Ansprüche, bei welchem der Knetteig oder der Rührteig in Portionen von jeweils 10-100 g aufgeteilt wird.

13. Verfahren nach einem der vorhergehenden Ansprüche, bei welchem das vollständig gekochte mehlhaltige Produkt aus der Gruppe gewählt ist, welche aus Doughnuts, gebratenen Nudeln, Schmalzgebäck, Spritzkuchen, Krapfen, Churros, Bunuelos und Xuxos besteht.

14. Verfahren nach Anspruch 13, bei welchem das vollständig gekochte mehlhaltige Produkt ein Doughnut ist.

15. Verfahren nach Anspruch 14, bei welchem das Verfahren einen vollständig gekochten Doughnut ergibt, welcher 2-10 Gewichtsprozent Fett enthält.

## Revendications

1. Procédé de préparation d'un produit alimentaire farineux complètement cuit, ledit procédé comprenant les étapes successives de :
A. préparation d'une pâte farineuse à cuire ou à frire en mélangeant de la farine, de l'eau et facultativement un ou plusieurs autres ingrédients de boulangerie ;
B. division de la pâte à cuire ou à frire en une ou plusieurs portions ; et
C. cuisson de ladite ou desdites portions en les exposant (i) pendant un total de 20 à 600 secondes à un rayonnement infrarouge, plus de 50 % de l'énergie que contient ledit rayonnement infrarouge provenant d'un rayonnement infrarouge d'une longueur d'onde dans la plage de 0,7 à 10 µm et (ii) pendant un total de 20 à 600 secondes à un impact d'air chaud ayant une température d'au moins 150 °C, dans lequel l'exposition au rayonnement infrarouge et l'exposition à l'impact d'air chaud peuvent avoir lieu simultanément, successivement ou en combinaisons quelconques ; et
dans lequel une composition de revêtement contenant une matière grasse est appliquée sur la surface des portions avant, pendant ou après leur cuisson, la matière grasse étant sélectionnée parmi les triglycérides, les diglycérides, les monoglycérides, les phospholipides et leurs combinaisons.

2. Procédé selon la revendication 1, dans lequel le rayonnement infrarouge est fourni par des dispositifs de chauffage à tubes à infrarouge.

3. Procédé selon la revendication 1 ou la revendication 2, dans lequel le rayonnement infrarouge a une longueur d'onde de 0,7 à 5,0 µm.

4. Procédé selon l'une quelconque des revendications précédentes, dans lequel les portions sont exposées à un impact d'air chaud ayant une température de 180 à 340 °C, de préférence de 200 à 320 °C.

5. Procédé selon l'une quelconque des revendications précédentes, dans lequel l'impact d'air chaud comprend l'impact des portions avec un air chaud ayant une vitesse d'au moins 1 m/s, de préférence de 5 à 20 m/s.

6. Procédé selon l'une quelconque des revendications précédentes, dans lequel le volume des portions augmente d'au moins 5 %, de préférence d'au moins 25 % durant la cuisson dans l'étape C.

7. Procédé selon l'une quelconque des revendications précédentes, dans lequel la température à l'intérieur des portions augmente au moins jusqu'à 95 °C durant la cuisson dans l'étape C.

8. Procédé selon l'une quelconque des revendications précédentes, dans lequel la composition de revêtement contient :
de 20 à 100 % en poids de matière grasse ;
de 0 à 80 % en poids d'eau ;
de 0 à 30 % en poids d'hydrates de carbone ;
de 0 à 20 % en poids de matière protéique ; et
de 0 à 20 % en poids d'autres ingrédients de boulangerie.

9. Procédé selon l'une quelconque des revendications précédentes, dans lequel la composition de revêtement est appliquée sur la surface pour délivrer de 2 à 10 %, de préférence de 3 à 8 % de matière grasse en poids des portions.

10. Procédé selon l'une quelconque des revendications précédentes, dans lequel les portions de pâte à cuire lèvent à l'aide de levure et/ou d'un agent levant chimique avant l'exposition à la cuisson de l'étape C.

11. Procédé selon l'une quelconque des revendications précédentes, dans lequel la pâte à cuire ou à frire préparée dans l'étape A contient moins de 10 % de matière grasse en poids de farine.

12. Procédé selon l'une quelconque des revendications précédentes, dans lequel la pâte à cuire ou à frire est divisée en portions pesant chacune 10 à 100 g.

13. Procédé selon l'une quelconque des revendications précédentes, dans lequel le produit farineux totalement cuit est sélectionné dans le groupe constitué de : beignets, nouilles frites, lardy cakes (cake aux fruits secs et à la graisse de porc), Spritzkuchen, Krapfen, churros, bougnettes et xuxos.

14. Procédé selon la revendication 13, dans lequel le produit farineux totalement cuit est un beignet.

15. Procédé selon la revendication 14, dans lequel le procédé donne un beignet totalement cuit contenant de 2 à 10 % en poids de matière grasse.
